# EUROPEAN PATENT SPECIFICATION

(11) **EP 0 508 569 B1**
(45) Date of publication and mention of the grant of the patent: **18.09.1996**
(21) Application number: 92301117.5
(22) Date of filing: 11.02.1992
(51) Int. Cl.: B25B 1/12, B23Q 5/40, F16H 25/20

(54) **Synchro-clutching screw-and-nut mechanism**
Synchron-kuppelnder Schraube-Mutter-Mechanismus
Mécanisme vis-écron à accouplement synchronique

(30) Priority: 03.04.1991 CN 91101816
(43) Date of publication of application: 14.10.1992
(73) Proprietor: Fan, Chaolai, Changchun, Jilin 130022 (CN)
(72) Inventor: Fan, Chaolai, Changchun, Jilin 130022 (CN); Fan, Yongjie, Changchun, Jilin 130022 (CN); Fan, Mengqing, Changchun, Jilin 130022 (CN)
(74) Representative: Jenkins, Peter David

(56) References cited:
- EP-A- 0 354 644
- CN-A- 1 046 213
- DE-A- 2 814 137
- GB-A- 819 506
- US-A- 3 007 358
- US-A- 3 492 886

## Description

This invention relates to a new type of screw-and-nut mechanism. It is especially suited for application in the feed and transmission systems in the kinematic pairs in bench vices, parallel-jaw vices, tail stocks and sliding tables used on machine tools, and also for all kinds of screw-driven devices requiring fast translational motion.

On April 7, 1989, the applicant submitted to the Chinese Patent Office a patent application under the title "A New Type of Screw-driven Mechanism", the number of this patent application is 89102066.7 Publication No. CN-A-1 046 213. In Fig. 11 of said application is disclosed a screw stem with the journals at its two ends rotatably supported in bearings disposed in fixed bearing supports, and under the action of an eccentric cam sleeve and a uni-directional pawl, a half-nut can be made to slide up and down along a guide post, whereby the meshing and disengagement of the screw and the half-nut can be effected. This prior art is simple and useful, however, it can only be applied to relatively rigid screw stems of a relatively short length, otherwise the screw stem will likely be bent and will not work properly.

US-A-3492886 discloses a screw-and-nut mechanism comprising a supporting structure, a screw stem and a nut member together in engagement device for selectively bringing the screw stem and threads of the nut member into engagement, the engagement device comprising a sprung friction pad acting on the screw stem and urging a portion of the nut member towards the stem.

The object of the present invention is to overcome the shortcomings of said prior art and to provide a synchro-clutching mechanism suitable for application on screw stems of various lengths.

EP-A-0354644 discloses a screw-and-nut mechanism comprising a supporting structure, a screw stem, a nut member and a lifting device disposed within the nut member for selectively lifting the nut member so that the screw stem engages with threads on the nut member.

According to the present invention there is provided a synchro-clutching screw-and-nut mechanism comprising a supporting structure, a screw stem supported in said structure, a nut partially threaded member and a lifting device for relatively moving the screw stem and the nut member, whereby the nut member selectively engages the screw stem, the supporting structure having lift-guiding means for guiding the nut, and the lifting device being moveable relative to the supporting structure by rotation of the screw stem characterised by further comprising an overload release device and a lift limiting device, and by the lifting device having a surface engaging the outside of the nut member whereby the nut member is lifted up and down.

In a preferred embodiment:
(1) The supporting structure comprises supporting arms, base plate and lift-guiding means, the screw stem is slidably supported in the holes provided in the supporting arms, and is to co-function with the partially threaded nut with its lifting device set between the supporting arms;
(2) The partially threaded nut assembly comprises a nut with internal threads on less than half of the internal perimeter of the oval hole therein, means for guiding the nut to move up and down and means to effect the up-and-down movement of the nut;
(3) An actuating device to transmit the force to actuate the lifting device, overload release device and lift-limiting device are provided.

The invention may also incorporate a locking device to lock the nut in position so that the screw stem can be advanced or retracted slowly by turning it in the usual manner.

The merits of this invention are: The partially threaded nut is made to move up and down relative to the screw stem, this overcomes the shortcomings of up-and-down movement of the screw stem, as is the practice of prior art designs. The function of quick meshing and disengagement between the nut and screw enables a fast advance or retraction of the screw stem over its empty travel and quick adjustment of distance, thus elevating work efficiency. Because the radial internal forces in the mechanism are well balanced within a three-point-contained system, it can sustain large axial loads. Especially its merit of not requiring the screw stem to move up and down makes it easy to exchange an existing screw-and-nut mechanism with one of the present invention. Also the meshing and disengagement operation of the screw-and-nut mechanism of the present invention is synchronized with the turning motion of the screw stem, thus it can be used in bench vices, parallel-jaw vices and tail stocks, carriages and sliding tables of machine tools, and all kinds of screw-and-nut transmissions that require fast translational movement for enhanced efficiency. In a word, this mechanism not only overcomes the drawbacks of prior art devices while retaining all their merits, it also possesses the features of capable of sustaining high axial loads, quick meshing and disengagement, simple in structure and easy to operate.

Taking the application of the present invention in a bench vice as an example, the structure and working principles of the various embodiments of the invention are explained with the illustration of the accompanying drawings:
Fig. 1 is the diagram (Fig. 11) attached to the patent application 89102066.7 of the applicant, it shows a screw-driven mechanism with a saddle-shaped half-threaded nut which can be lifted and lowered for meshing and disengagement;
Fig. 2 is a sectional elevation of the screw-and-nut mechanism of the present invention with the partially threaded nut in its lowered position, the threads of the screw and of the nut being disengaged;
Fig. 3 is a sectional view in the direction of line A-A in Fig. 2;
Fig. 4 is a sectional view in the direction of line B-B-C-C in Fig. 2;
Fig. 5 is a top sectional view in the direction of line D-D in Fig. 2;
Fig. 6 is a sectional elevation of the screw-and-nut mechanism of the present invention with the partially threaded nut in its lifted position, the threads of the screw and of the nut being in mesh;
Fig. 7 is a sectional view in the direction of line A'-A' in Fig. 6;
Fig. 8 is a sectional view in the direction of line B'-B'-C'-C' in Fig. 6;
Fig. 9 is an alternative embodiment to that in Fig. 8 of the device for the limitation of turning angle of the nut-lifting sleeve;
Fig. 10 is a sketch showing the integration of the supporting framework of the screw-and-nut mechanism with the fixed vice member;
Fig. 11 is a sketch showing an embodiment with a framework as the supporting structure and a friction-ring type overload release device;
Fig. 12 is a sectional view in the direction of line E-E in Fig. 11;
fig. 13 is a sectional view in the direction of line G-G in Fig. 11;
Fig. 14 is a sectional view in the direction of line G-G in Fig. 11, with the side-bars of the framework being replaced by a separately assembled top frame. (This sectional view is designated G₀-G₀);
Fig. 15 is a sectional view in the direction of line G-G in Fig. 11, with the overload release device replaced by an expanding friction ring type device. (This sectional view is designated G₁-G₁);
Fig. 16 is a sectional view in the direction of line G-G in Fig. 11, with the overload release device replaced by a contracting friction hoop type device. (This sectional view is designated G₂-G₂);
Fig. 17 is a sectional elevation of the screw-and-nut mechanism of Fig. 11, with the overload release device replaced by an axial-pin-and-dent option;
Fig. 18 is an overload release device of the radial-pin-and-dent type, equivalent in effect to the dial-pin-and-dent design in Fig. 17;
Fig. 19 is a similar embodiment as in Fig. 2, with the addition of a locking device, showing the sectional view in the direction of line C-C in Fig. 2. (This sectional view is designated C₁-C₁).

In the drawing the numerals represent the following:

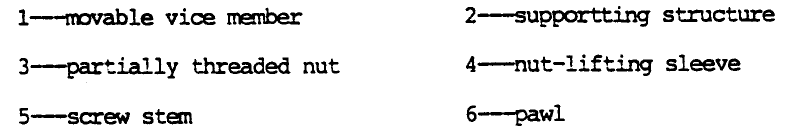

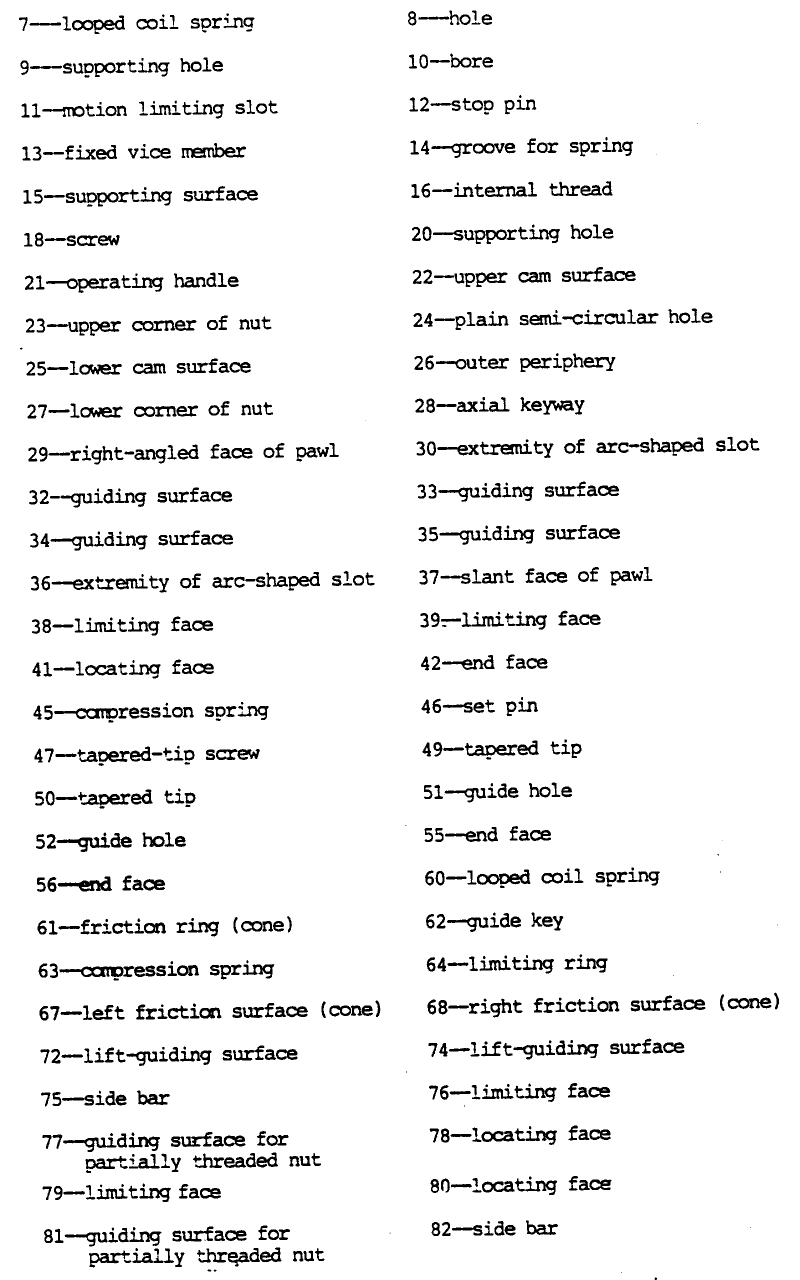

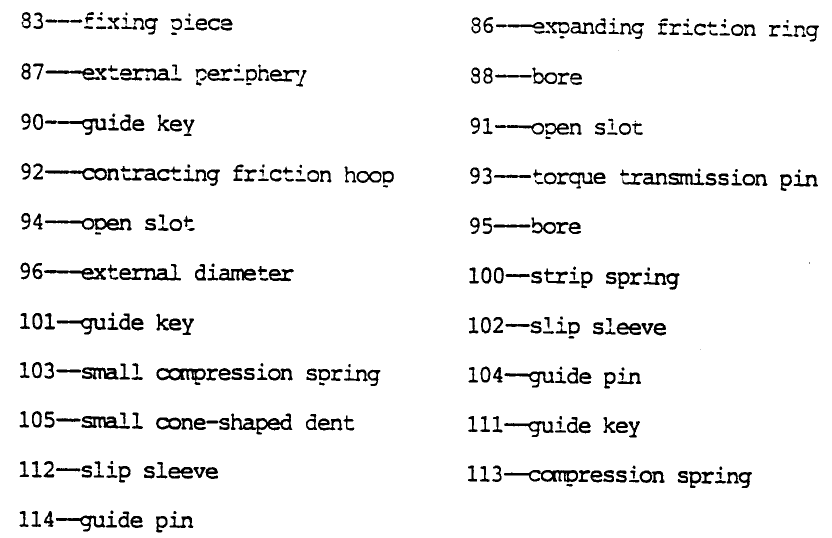

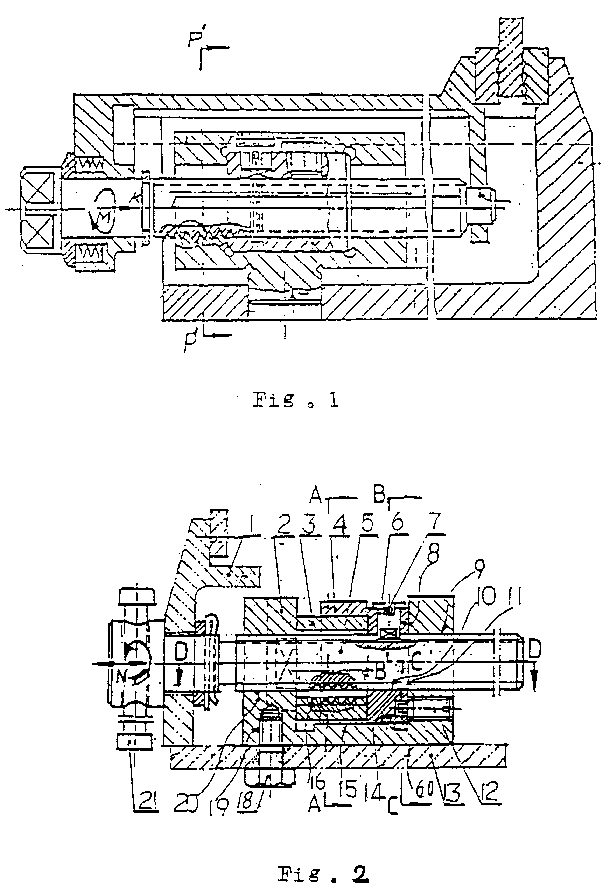

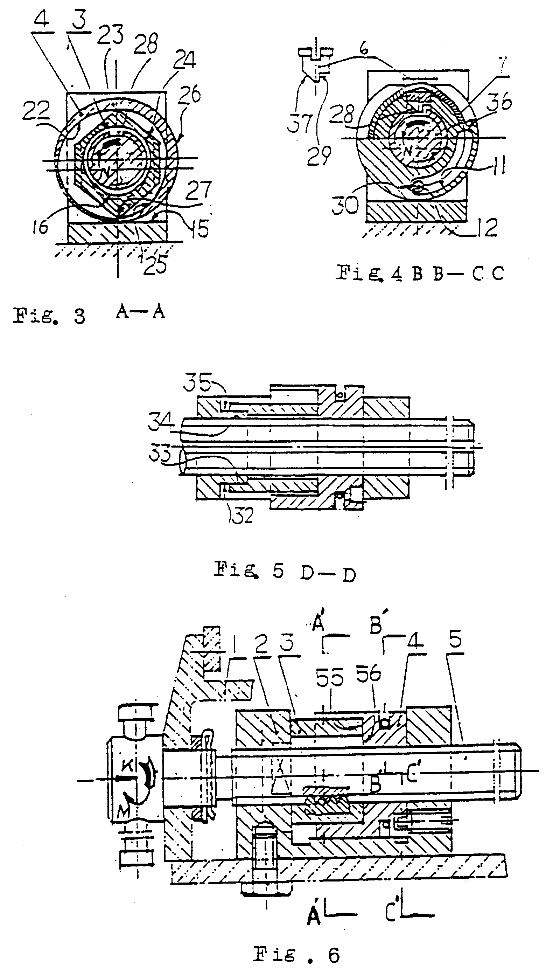

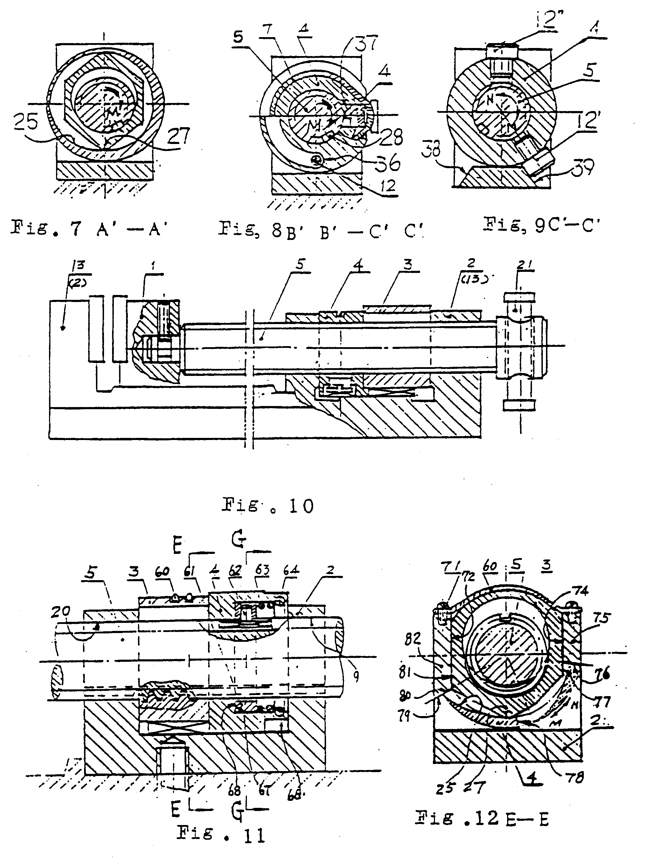

Referring to Fig. 2 of the accompanying drawings, the supporting structure 2 may be a saddle-shaped member, the screw stem 5 with external threads along its length is slidably supported in the supporting holes 9, 20 bored in the two arms of the saddle (supporting arms). Guiding surfaces 32, 35 are provided on the left supporting arm (Fig. 5) to slidably engage with the guiding surfaces 33, 34 on the partially threaded nut 3 to guide the lift of the latter. The lift-guiding members may be guided kinematic pairs with gliding members or rollers; the cross-section of the guiding members may be of various shapes such as rectangular, triangular, dove-tail shaped or curvilinear (circular or arc-shaped). In a framed supports structure 2 the lift-guiding surfaces 72, 74 may be machined off the inner face of the side bars 82, 75 (see Figs. 11, 12). For convenience of machining, the side bars 82, 75 may be separate members of the main framework and fixed to the latter after machining and assembled with a fixing piece 83 (Fig. 14). The supporting surface 15 in the base plate of the structure contacts the outer periphery 26 of the nut-lifting sleeve 4, while the bottom face of the base plate is secured to the vice body by screws 18. The joining method of the supporting structure with the vice body or sliding table, in fact, may also use any other surface of the structure to join with a fixed (or movable) vice member (or sliding table), the supporting structure may even be integrally incorporated in the fixed (or movable) member 13 of the vice, as is shown in Fig. 10. Also, the aims with the supporting holes may be separately fixed onto the sliding table away from the structure.

The "partially threaded nut" 3 has an oval bore composed of two semi-circular holes and a connecting central portion. The lower (or upper) semi-circular hole has internal thread 16 (preferably Acme thread or sharp V thread) to mesh with the external thread on the screw stem 5, the threaded portion extends over slightly less then half of the perimeter of the hole, the upper (or lower) semi-circular hole 24 has a plain internal surface, with an internal diameter larger than the external diameter of the screw stem. The distance between the centers of the two semi-circular holes is greater than the tooth height of the thread. The partially threaded nut 3 may have the form of a half-nut, deleting its upper, plan-surfaced half. At the left end of the partially threaded nut 3, two guiding surfaces 33 and 34 are provided in a recess (or it may also be designed as male guiding surfaces, such as 77, 81 in Fig. 12) to Slidably engage with the guiding surfaces 32, 35 (or guiding surfaces 74, 72 in Fig. 12) in the supporting structure. At the outer periphery of the partially threaded nut, two diametrically opposite corners 23, 27 are in contact engagement with the depressing and lifting cam surfaces 22, 25 disposed on the inner periphery of the nut-lifting sleeve 4. Said corners may be rounded off to have arc surfaces of a small radius.

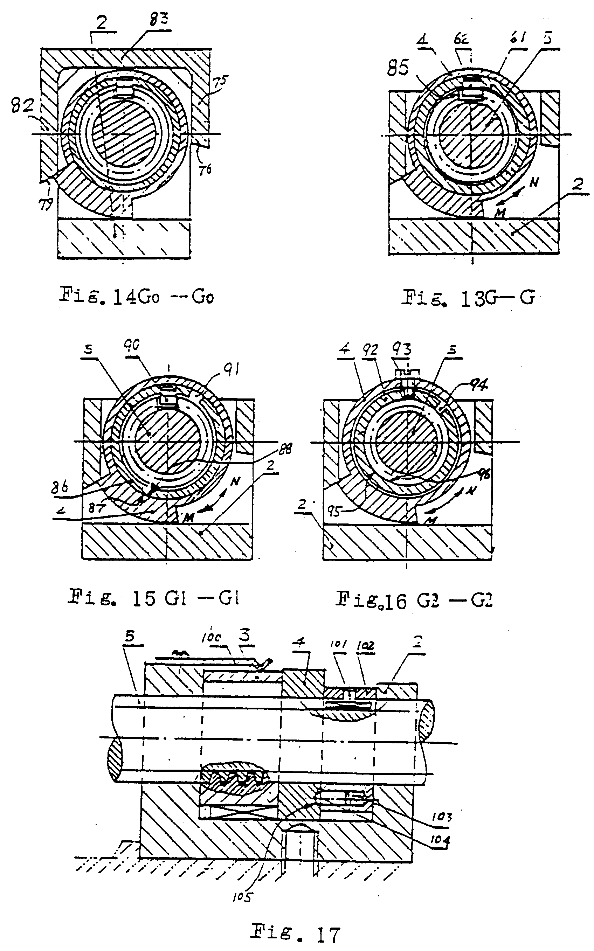

The nut-lifting device with an overload release mechanism consists of a nut-lifting sleeve 4, a pawl 6, a looped coil spring 7 and a stop pin 12. The two cam surfaces 25, 22 to effect the rise and fall of the nut 3 are provided on the inner surface at the left end of the nut-lifting sleeve 4, said cam surfaces 25, 22 are in contact engagement with the corresponding corners 27, 23 on the partially threaded nut 3. As the screw stem 5 is turned in the direction M (see Fig. 7), it also turns the nut-lifting sleeve 4 in the same direction, the lower cam surface 25 of the nut-lifting sleeve 4 pushes against the nut corner 27 and thus lifts the partially threaded nut 3 upwards until the threads of the screw stem and the nut mesh with each other. On the other hand, when the screw stem 5 is turned in the opposite direction N, the upper cam surface 22 of the nut-lifting sleeve presses the nut corner 23 and thus presses the partially threaded nut 3 downwards until the threads of the screw stem and the nut disengage from each other. This lifting device may also dispense with the upper cam surface 22 of the nut-lifting sleeve 4 as illustrated in Figs. 11, 12, and use a looped coil spring 60 (or the strip spring 100 in Fig. 17) to replace the function of cam surface 22 to force the partially threaded nut 3 to descend. Similarly, alternative devices may be used to effect the up and down movement of the nut 3, for instance, co-functioning end-face cams, or end-face cam-groove and guide-pin may be set in the end face 55 of the partially threaded nut 3 and the end face 56 of the nut-lifting sleeve 4 (Fig. 6) to replace the cam surfaces 22, 25. Other equivalent-effect devices such as connecting rods, cranks and levers may also be used.

The bore 10 at the right end of the nut-lifting sleeve 4 fits slidably over the outer periphery of the screw stem 5, and the outer periphery 26 concentric with are 10 is in contact with the supporting surface 15. A hole 8 is located at the right end of the nut-lifting sleeve 4, wherein a pawl 6 is slidably encased. Also one (or more) groove 14 is provided around the outer periphery of the nut-lifting sleeve 4, wherein a looped coil spring 7 is placed to press on the pawl 6, so that the slant face 37 at the lower tip of the pawl 6 is tightly pressed in the axial keyway 28 and engages with the lateral edge of said keyway 28. When the screw stem 5 is turned in the direction M (see Fig. 8), the torque is transmitted through the slant face 37 to turn nut-lifting sleeve 4 simultaneously in the direction M, until the extrimity of the arc-shaped slot 36 engages with the stop pin 12, thus stopping the turning of the nut-lifting sleeve 4. However, the screw stem 5 continues to be turned in the direction M, the force acting on the slant face 37 of the pawl 6 increases, until the axial component of the force acting on the pawl 6 overcomes the tightening force of the looped coil spring 7 and the slant face 37 slips out of the keyway 28, causing the disengagement of the nut-lifting sleeve 4 from the screw stem 5 while not impeding the further turning of the screw stem 5, playing the role of an overload releasing clutch. The lower tip of the pawl 6 may be more appropriately designed to have two opposite slant faces, thus would serve as a bi-directional overload clutch. However, as a bench vice is taken as the embodiment example here, when the screw stem 5 is turned in the opposite direction (i.e. in the direction N), it usually serve to loosen the work piece. In such cases it would be better to let the operator have a feel of touch that loosening has been achieved. If the screw stem 5 is forced to a stop, the feeling will be more pronounced. In order to attain such an aim, it is sometimes appropriate to make the lower tip of the pawl 6 to have one face 37 slanting and the opposite face 29 right-angular, as is shown in Fig. 4.

In the process of torque-transmission from the screw stem 5 to the nut-lifting sleeve 4, various forms of overload clutches with equivalent effects may be used. Classifying them by their types, they may be uni-directional, bi-directional, over-riding, magnetic, hydraulic or pneumatic; classifying them by their clutching elements, they may have pawls, jaws, steel balls, guide pins, friction cones (discs, plates, blocks, rings, pads, etc.) and various springy elements (such as springs, expanding rings, contracting hoops, expanding sleeves, etc.). In short, all types of overload clutches are the equivalents of the overload release devices within the scope of the present invention. Some embodiment examples of the overload release devices are described below. Figs. 11, 12, 13 show an overload release device of the friction ring (or cone) type. Its working principle is: the friction ring (cone) 61 is disposed within the nut-lifting sleeve 4 and is slidably mounted on the periphery of the screw stem 5. Under the action of the compression spring 63, its left friction surface (cone) 67 is tightly pressed against the right friction surface (cone) 68 of the nut-lifting sleeve 4. The friction ring (cone) 61 is connected with the screw stem 5 through the guide key 62. When the screw stem 5 is turned, the torque is transmitted via the keyway 28 , guide key 62, the left friction surface (cone) 67 of the fricton ring (cone) 61 to the nut-lifting sleeve 4 and drives the latter to rotate with it. When the locating face 78 (or 80) of the nut-lifting sleeve 4 contacts the limiting face 76 (or 79) on the framework, the nut-lifting sleeve 4 stops rotating while the screw stem 5 continues to be turned, the turning torque will overcome the frictional torque on the left friction surface (cone) 67 of the friction ring (cone) 61, causing these surfaces to slip, thus effects the overload release.

Fig. 15 shows an expanding friction ring type overload release device. Its working principle is: the friction ring 61 and compression spring 63 in Fig. 11 are replaced by the expanding friction ring 86, and the limiting ring 64 is used in this case to limit the axial movement of the expanding friction ring 86. An open slot 91 is made in the cylindrical body of the ring 86. In its free state this ring will have a diameter of its external periphery 87 larger than the diameter of the bore 88 of the nut-lifting sleeve 4. When assembling, the open slot 91 is forced to close, releasing it after the ring 86 has been slipped into the bore 88. Thus the external periphery 87 of the expanding ring 86 will bear against the bore surface 88 under its own spring force, producing a frictional force between them. The internal diameter of the expanding ring 86 is slightly larger than the external diameter of the screw stem 5, the expanding ring being connected with the screw stem 5 through the guide key 90. The working process is similar to that of the friction ring in Fig. 11, the difference being during overload condition slipping occurs at the external periphery of the expanding ring instead of the end surface of the friction ring.

Fig. 16 shows a contracting friction hoop type overload release device. Its working principle is substantially similar to that of the device shown in Fig. 15. The contracting friction hoop 92 also has an axial open slot 94. In its free state the internal diameter of its bore 95 is slightly smaller than the external diameter 96 of the screw stem 5. After assembling, the hoop 92 will tightly hold on the cylindrical periphery of the screw stem 5, producing a frictional force between them. (There is no keyway on the screw stem 5 in this case). The external diameter of the contracting friction hoop 92 is smaller than that of the bore of the nut-lifting sleeve 4. The turning torque of the screw stem 5 is transmitted to the nut-lifting sleeve through a pin 93. Its working process is similar to that of the device shown in Fig. 15, only the slipping under overload condition takes place between the friction surfaces of the external periphery of screw stem 5 and the inner surface of the bore of the hoop.

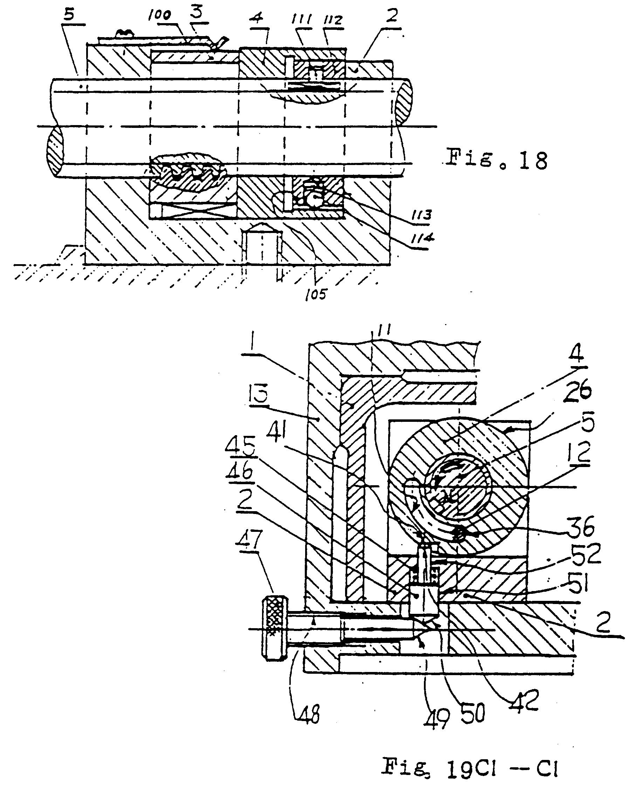

Fig. 17 is an axially disposed guide pin (or steel ball) overload release device. Its working principle is thus: in the left end surface of the sleeve 102 mounted on the screw stem 5 is drilled an axial hole, wherein a small compression spring 103 and a guide pin (or steel ball) 104 is lodged. This pin (or steel ball) engages with a small conical dent 105 located in the right end surface of the nut-lifting sleeve 4. Also its working process is basically similar to that of the device in Fig. 11, only the friction of the end surfaces in Fig. 11 is substituted by the clogging force between the conical dent and guide pin (or steel ball). The device shown in Fig. 18 is an equivalent of that in Fig. 17, only that the axially disposed guide pin hole in Fig. 17 is replaced by the radially guide pin hole in Fig. 18. Their working principles are the same.

Based on the device in Fig. 17, supposing on the respective contacting end surfaces of slip sleeve 102 and nut-lifting sleeve 4, end jaws, i.e. pawls with a certain inclination angle of the face (uni-directional or bi-directional) are disposed, then with the provision of a compression spring and the necessary space for the rightward movement of the slip sleeve 102 after overload release, the device in Fig. 17 will become an end-jaw-clutch type overload release device. In short, there may be numerous overload release devices comprising of different overload releasing elements that all fall within the scope of equivalent devices of the present invention.

In Figs. 2, 4, at the right end of the nut-lifting sleeve 4 there is provided a motion-limiting slot 11 to limit the turning angle of the nut-lifting sleeve 4 through the contact of the stop pin 12 with the two extremities 30, 36 of the slot. The motion-limiting slot 11 may be replaced by a slot over an arc in the periphery at the right end of the nut-lifting sleeve 4 or by a circumferential slot over an arc, or the stop pin 12 (one or two) may be fixed on the outer periphery of the nut-lifting sleeve 4, as is shown in Fig. 9, thus the limiting faces 38, 39 on the two sides of the base plate can be used to limit the turning angle of the nut-lifting sleeve 4. When the support is designed in the form of a framework as is shown in Figs. 11, 12, the surface underneath the side bars 79, 76 may be used as limiting faces. Obviously there may be numerous motion-limiting devices that fall within the scope of the present invention.

One or more axial slots are disposed on the outer periphery of the screw stem 5. These slots are to engage with the pawl 6 in Fig. 2, and to co-function with the guide key in Figs. 11, 15, 17. When adopting the overload release device of the contracting-hoop type shown in Fig. 16, no slots need to be provided on screw stem 5.

As the partially threaded nut is disposed between the two supporting arms with the bearing holes, the screw stem leads through these holes and is supported therein, so after the meshing of the screw threads, a three-point contained system is formed among the two bearing holes 20, 9 and the centrally disposed threaded portion 16 in the nut, this system has all the radial forces well balanced with a quick meshing and disengaging screw assembly, it can thus sustain very large axial loads.

The working principle of the screw-and-nut mechanism with its meshing and disengagement effected by the lifting and depressing of the partially threaded nut having a uni-directional pawl is thus: When it is required to loosen the clamped workpiece and rapidly retract the movable vice member 1, the handle 21 is operated to cause the screw stem 5 to turn towards the left, in the direction N (see Figs. 2, 3, 4), pawl 6 is depressed by the looped coil spring 7 and lodges in the axial keyway 28 in the screw stem 5. The lateral face of the keyway 28 bears against the right-angled face 29 of the pawl 6 and drives the nut-lifting sleeve 4 to turn left, whereby the cam surface 22 acts on the upper corner 23 of the nut and depresses the latter until stop pin 12 engages with the left extremity 30 of the arc-shaped slot 11. At this moment the center line of the internal threads in the partially threaded nut 3 is lowered from its highest position 01-01 to its lowest position 02-02, completely disengaging the internal thread 16 in the nut from the external thread on the screw stem 5. The screw stem 5 and the movable vice member 1 can now be pulled back freely with the hand, fulfilling the requirement of fast traversing over the empty-travel and quick adjustment of the opening of the gap between the vice jaws.

Reversely, when it is required to clamp the workpiece in the vice, the handle 21 is operated to cause the screw stem 5 to turn towards the right, in the direction M (see Figs. 6, 7, 8), the lateral edge of the keyway 28 bears against the slant face 37 of the pawl 6 and drives the nut-lifting sleeve 4 to turn right, whereby the cam surface 25 acts on the lower corner 27 of the nut 3 and lifts the latter until stop pin 12 engages with the right extremity 36 of the arc-shaped slot 11. At this moment the center line of the internal threads in the partially threaded nut 3 is raised from its lowest position 02-02 to the highest position 01-01, coinciding with the axis of the screw stem 5, effecting a complete meshing of the internal threads 16 in the lower half periphery of the nut with the external thread on the screw stem 5. As the screw stem 5 continues to be turned in the direction M, the pawl-type overload release mechanism will slip and will not impede the screw stem 5 to turn in the direction M. As the nut is held stationary, the screw stem will carry the movable vice member to move along the direction K, until the workpiece is tightly clamped.

Fig. 11 shows a lift-nut-to-engage type screw-and-nut mechanism with a framework wherein is disposed a nut-lifting sleeve having only a lower cam surface and an end-friction-ring type overload release device. Its working principle is basically the same as that in Fig. 2. When the screw stem 5 is turned in the direction M, the torque in the screw stem is transmitted to the nut-lifting sleeve 4 through the guide key 62 and the friction ring 61, causing the nut-lifting sleeve 4 to turn also in the direction M, until it is stopped by the limiting face 79. At this moment the partially threaded nut 3 has been raised to its highest point, the threads on the screw stem and in the nut are meshed. Further turning of the screw stem 5 will cause the end friction surfaces of the overload release mechanism to slip, allowing the screw stem 5 to be turned further until the workpiece is tightly clamped. On rotating the screw stem in the opposite direction (direction N), the end friction ring will cause the nut-lifting sleeve 4 to also rotate in the direction N, until the limiting face is reached, under the action of the looped coil spring 60 the partially threaded nut is depressed to its lowest position, the threads are disengaged, the vice jaw (or sliding plate) may now be freely retracted to the right position.

Based on the embodiment of Fig. 2, Fig. 19 shows the inclusion of a locking mechanism that may be used to control the lifting and depressing of the partially threaded nut, thus enabling the screw stem 5 not only to advance slowly but also retract slowly. This function is explained with the mechanism in Figs 2, 8 as basis. Firstly, the pawl 6 is to be changed with one having dual slant faces. The locking mechanism comprises of a set pin 46, a compression spring 45,a tapered-tip screw 47 and a locating face 41 in the nut-lifting sleeve 4. The set pin 46 is received in the stepped guide holes 52 and 51. By adjusting the contact position of the tapered tip 49 of the screw 47 and the tapered tip 50 at the lower end of the set pin 46, the set pin 46 is raised or lowered. When it is raised, its top face 42 will abut against the locating face 41 in the nut-lifting sleeve 4, the spring 45 is compressed. When the screw 47 is turned to be retracted towards the left, the tapered tip at its right end will be retracted towards the left, the tapered tip 50 of the set pin will be lowered under the action of the spring 45, the top face 42 of the set pin 46 is also lowered, until it is clear of the outer periphery 26 of the nut-lifting sleeve 4 and no longer hinders its rotation.

The above mentioned "locking mechanism" may be made to lock the partially threaded nut directly, the only thing one has to do is to make the top face 42 of the set pin 46 to abut against a certain part of the partially threaded nut 3. There may be various ways to lock the nut-lifting sleeve 4 or to directly lock the partially threaded nut 3 in position, for instance, to use a member in a connecting-bar mechanism to hook a certain part of the nut-lifting sleeve 4 or the partially threaded nut 3. Moreover, as for the locking mechanism itself, there may also be many options with equivalent effects and operating methods, such as to use a connecting-bar mechanism and the like for remote operation or remote control, to use hydraulic, pneumatic or magnetic actuators for raising or lowering the set pin 46. All these fall within the scope of the present invention.

There are also several embodiment examples for partial improvements, they are: (1) When the present invention is used in the transmission of comparatively small axial loads, the supporting structure in Fig. 2 may dispense with the right supporting arm and its supporting hole 9 and retain only the left supporting arm with the supporting hole 20; (2) For the supporting hole of the framework 2, a guide sleeve made of comparatively hard material may be fixed in the supporting hole, or the guide sleeve may also be integrally incorporated in the right end of the nut-lifting sleeve 4.

The synchro-clutching screw-and-nut mechanism provided by the present invention is characterized by the following merits:
(1) Because the partially threaded nut is located within the supporting structure, a three-point-contained system is attained after the threads in the nut and on the screw stem are meshed, all the radial (internal) forces are thoroughly balanced within the structure, hence its functions are reliable and very great axial forces can be transmitted. Compared with a conventional set-up with a whole nut, it is equivalent in effect in all respects regarding transmission by meshed threads, strength and loading capacity.
(2) Because the process of lifting and lowering of the partially threaded nut, hence the meshing and disengaging of the threads on the screw stem and in the nut, is self-initiated simultaneously with the turning of the screw stem, the meshing and disengagement of the threads can be completed within very short time. Experiments have shown that it requires only 0.3-0.5 seconds.
(3) Because the overload release mechanism for the nut-lifting sleeve applies the driving force in an intermittent manner (such as in the case of pawl, guide-pin or steel ball types) during the process of meshing, if ever it happens that the crests of two mating threads are in the same line, the overload release mechanism will momentarily slip and provide condition for re-meshing, thus the rate of successful meshing of the threads is 100%.
(4) Because an overload release mechanism is provided, so when the nut-lifting sleeve has completed its function, the overload release mechanism will take effect and the further turning of the screw stem is not hindered. Hence tight clamping can be achieved within the entire traveling range of the transmission mechanism.
(5) Because the axis of the screw stem does not displace up and down, it rotates around a fixed center line, hence it is interchangeable with set-ups with screw-nuts of conventional design; its range of application is wide.
(6) Its construction is very simple. Besides the screw stem and partially threaded nut, only 3 or 4 small parts need to be added, therefore its cost is low and is easy to manufacture.
(7) It is easy to operate and can be manipulated with a single handle, it preserves the conventional mode of operation and will thus be widely accepted by the user.

## Claims

1. A synchro-clutching screw-and-nut mechanism comprising a supporting structure (2), a screw stem supported in said structure, a partially threaded nut member (3) and a lifting device for relatively moving the screw stem (5) and the nut member (3), whereby the nut member (3) selectively engages the screw stem (5), the supporting structure (2) having lift-guiding means (32,35) for guiding the nut (3), and the lifting device being moveable relative to the supporting structure by rotation of the screw stem (5) characterised by further comprising an overload release device (28,61,62,63,68) and a lift limiting device (45-47,51,52), and by the lifting device having a surface (22,25) engaging the outside of the nut member (3) whereby the nut member is lifted up and down.

2. A mechanism as claimed in claim 1 wherein the lifting device is a nut-lifting sleeve.

3. A mechanism as claimed in claim 2 wherein the lift guiding means comprises guiding surfaces on the support structure slidably engaging guiding surfaces of the nut member, and the lift limiting means comprises a pin secured to the supporting structure or secured to the nut lifting sleeve and engaging with a motion limiting portion in the nut lifting sleeve or the supporting structure.

4. A mechanism as claimed in claim 2 wherein the lift guiding means is formed by the inner surfaces of side bars of the supporting structure, said inner suraces slidably engaging guide surfaces of the nut member and the lift limiting means comprise limiting faces at the bottom of the side bars.

5. A mechanism as claimed in any one of claims 2, 3 or 4 wherein upper and lower cam surfaces are provided on the inner periphery of the nut lifting sleeve, whereby lifting occurs by engagement between corners of the nut member and said cam surfaces.

6. A mechanism as claimed in any one of claims 2-5 having a cam surface on the lower part of the inner periphery at an end of the nut lifting sleeve, whereby a bottom corner of the nut engages the cam surface.

7. A mechanism as claimed in claim 6 further comprising a spring acting on an upper portion of the nut member.

8. A mechanism as claimed in any one of claims 2-7 wherein the overload release device comprises a radial pawl hole in the nut lifting sleeve, a pawl disposed in the pawl hole, the pawl being in working engagement with an axial key way in the screw stem, and a spring member acting on said pawl.

9. A mechanism as claimed in any one of claims 2-8 wherein the overload release device comprises a friction ring received in the nut lifting sleeve and connected to the screw stem via a guide key, the screw stem having an axial key way for engaging with the guide key.

10. A mechanism as claimed in any one of claims 2-8 wherein the overload release device comprises a contracting hoop, a torque transmission pin, and a limiting ring, wherein the hoop has an open slot, and in the free state of the hoop, the internal diameter of the hoop is smaller than the external diameter of the screw stem, wherein the hoop is mounted on the screw stem between the stem and the nut lifting sleeve and is connected with the sleeve through the torque transmission pin.

11. A mechanism as claimed in any one of claims 2-8 wherein the overload release device comprises an expanding friction ring, a guide key and a limiting ring, the friction ring having an open slot and in its free state having a diameter larger than the internal diameter of the bore of the nut lifting sleeve, the friction ring being disposed between the screw stem and the nut lifting sleeve, and being connected with the screw stem through a guide key engaged in an axially key way in the screw stem.

12. A mechanism as claimed in any one of claims 2-8 wherein the overload release device comprises a slip sleeve, a guide key and an axial key way provided in the screw stem, a dent being provided in one end face of the nut-lifting sleeve, and the slip sleeve being connected with the screw stem through the guide key.

13. A mechanism as claimed in any preceding claim further comprises a locking device to control the lifting and depressing of the nut member.

14. A mechanism as claimed in claim 13, wherein the locking device comprises a set pin, a compression spring, a tapered-tip screw and a locking face on the nut lifting sleeve or the nut member, wherein the set pin is received in guide holes in the supporting structure.

15. A mechanism as claimed in any preceding claim wherein the nut member defines an oval hole, and has internal threads on less than half of the internal perimeter of the oval hole.

## Patentansprüche

1. Synchron-kuppelnder Schrauben-Mutter-Mechanismus, mit einem Trageaufbau (2), einem Gewindeschaft, der im genannten Aufbau getragen ist, einem teilweise mit Gewinde versehenem Mutterteil (3) und einer Hubeinrichtung, um eine Relativbewegung von Gewindeschaft (5) und Mutterteil (3) durchzuführen, wodurch das Mutterteil (3) wahlweise in den Gewindeschaft (5) eingreift, wobei der Trageaufbau (2) Hub-Führungsmittel (32, 35) zum Führen der Mutter (3) aufweist, und die Hubeinrichtung relativ zum Trageaufbau durch Drehung des Gewindeschafts (5) beweglich ist, dadurch **gekennzeichnet**, daß sie ferner eine Überlast-Löseeinrichtung (23, 61, 62, 63, 68) und eine Hub-Begrenzungseinrichtung (45-47, 51, 52) aufweist, und daß die Hubeinrichtung eine Oberfläche (22, 25) aufweist, die in die Außenseite des Mutterteils (3) eingreift, wodurch das Mutterteil nach oben und unten gehoben wird.

2. Mechanismus, wie beansprucht in Anspruch 1, worin die Hubeinrichtung eine Mutter-Hebehülse ist.

3. Mechanismus, wie beansprucht in Anspruch 2, worin die Hub-Führungsmittel Führungsflächen am Trageaufbau aufweisen, die verschieblich in Führungsflächen des Mutterteils eingreifen, und die Hub-Begrenzungsmittel einen Stift aufweisen, der am Trageaufbau oder an der Mutter-Hebehülse befestigt ist und in einen bewegungsbegrenzenden Abschnitt in der Hub-Hebehülse oder im Trageaufbau eingreift.

4. Mechanismus, wie beansprucht in Anspruch 2, worin die Hub-Führungsmittel von der inneren Oberfläche von Seitenstangen des Trageaufbaus gebildet sind, wobei die genannten inneren Oberflächen verschieblich in Führungsflächen am Mutterteil eingreifen und die Hub-Begrenzungsmittel Begrenzungsflächen an der Unterseite der Seitenstangen aufweisen.

5. Mechanismus, wie beansprucht in irgendeinem der Ansprüche 2, 3 oder 4, worin obere und untere Nocken- bzw. Steuerflächen am Innenumfang der Hut-Hebehülse vorgesehen sind, wodurch das Heben durch den Eingriff zwischen Ecken des Mutterteils und der genannten Steuerflächen erfolgt.

6. Mechanismus, wie beansprucht in irgendeinem der Ansprüche 2-5, mit einer Nocken- bzw. Steuerfläche am unteren Teil des inneren Umfangs an einem Ende der Mutter-Hebehülse, wodurch eine untere Ecke der Mutter in die Steuerfläche eingreift.

7. Mechanismus, wie beansprucht in Anspruch 6, ferner mit einer Feder, die auf einen oberen Abschnitt des Mutterteils einwirkt.

8. Mechanismus, wie beansprucht in irgendeinem der Ansprüche 2-7, worin die Überlast-Löseeinrichtung ein radiales Klinkenloch in der Mutter-Hebehülse aufweist, eine Klinke, die im Klinkenloch angeordnet ist, wobei die Klinke in betrieblichem Eingriff mit einer axialen Keilnut im Gewindeschacht steht, und ein Federteil, das auf die genannte Klinke einwirkt.

9. Mechanismus, wie beansprucht in irgendeinem der Ansprüche 2-8, worin die Überlast-Löseeinrichtung ferner einen Reibungsring aufweist, der in der Mutter-Hebehülse aufgenommen ist und mit dem Gewindeschaft über einen Führungsstein verbunden ist, wobei der Gewindeschaft eine axiale Keilnut zum Eingriff mit dem Führungsstein aufweist.

10. Mechanismus, wie beansprucht in irgendeinem der Ansprüche 2-8, worin die Überlast-Löseeinrichtung einen einengenden Reifen bzw. Spannreifen, einen Drehmoment-Übertragungsstift und einen Begrenzungsring aufweist, worin der Reifen einen offenen Schlitz aufweist, und der Innendurchmesser des Reifens im freien Zustand des Reifens kleiner ist als der Außendurchmesser des Gewindeschaftes, worin der Reifen am Gewindeschaft zwischen dem Schaft und der Mutter-Hebehülse angebracht ist und mit der Hülse durch den Drehmoment-Übertragungsstift verbunden ist.

11. Mechanismus, wie beansprucht in irgendeinem der Ansprüche 2-8, worin die Überlast-Löseeinrichtung einen expandierenden Reibring aufweist, einen Führungsstein und einen Begrenzungsring, wobei der Reibring einen offenen Schlitz und in seinem freien Zustand einen Durchmesser aufweist, der größer ist als der Innendurchmesser der Bohrung der Mutter-Hebehülse, der Reibring zwischen dem Gewindeschaft und der Mutter-Hebehülse angeordnet ist und in Berührung mit dem Gewindeschaft durch einen Führungsstein steht, der in eine axiale Keilnut im Führungsschaft eingreift.

12. Mechanismus, wie beansprucht in irgendeinem der Ansprüche 2-8, worin die Überlast-Lösevorrichtung eine Rutschhülse aufweist, einen Führungsstein und eine axiale Keilnut, die im Gewindeschaft vorgesehen ist, wobei eine Delle in der einen Endfläche der Nut-Hebehülse vorgesehen ist, und die Rutschhülse mit dem Gewindeschaft durch den Führungsstein verbunden ist.

13. Mechanismus, wie beansprucht in irgendeinem vorangehenden Anspruch, der ferner eine Verriegelungseinrichtung aufweist, um das Anheben und Niederdrücken des Mutterteils zu steuern.

14. Mechanismus, wie beansprucht in Anspruch 13, worin die Verriegelungseinrichtung einen Paßstift, eine Druckfeder, eine Schraube mit verjüngter Spitze und eine Sperrfläche an der Mutter-Hebehülse oder dem Mutterteil aufweist, und worin der Paßstift in Führungsbohrungen im Trageaufbau aufgenommen ist.

15. Mechanismus, wie beansprucht in irgendeinem vorangehenden Anspruch, worin das Mutterteil eine ovale Bohrung festlegt und ein Innengewinde auf weniger als der Hälfte des Innenumfangs der ovalen Bohrung aufweist.

## Revendications

1. Mécanisme à écrou et vis d'embrayage synchro comprenant une structure de support (2), une tige de vis (5) supportée dans ladite structure, un écrou partiellement fileté (3) et un dispositif élévateur pour déplacer relativement la tige de vis (5) et l'écrou (3), de sorte que l'écrou (3) engage sélectivement la tige de vis (5), la structure de support (2) comportant un moyen de guidage d'élévation (32, 35) pour guider l'écrou (3), et le dispositif élévateur étant mobile relativement à la structure de support par rotation de la tige de vis (5), caractérisé en ce qu'il comprend en outre un dispositif de libération de surcharge (28, 61, 62, 63, 68) et un moyen de limitation d'élévation (45-47, 51, 52), et le dispositif élévateur comportant une surface (22, 25) engageant l'extérieur de l'écrou (3) de sorte que l'écrou soit monté et baissé.

2. Mécanisme selon la revendication 1, dans lequel le dispositif élévateur est un manchon élévateur d'écrou.

3. Mécanisme selon la revendication 2, dans lequel le moyen de guidage d'élévation comprend des surfaces de guidage sur la structure de support engageant par glissement des surfaces de guidage de l'écrou, et le moyen de limitation d'élévation comprend un tige fixée à la structure de support ou fixée au manchon élévateur d'écrou et s'engageant avec une portion de limitation de déplacement dans le manchon élévateur d'écrou ou la structure de support.

4. Mécanisme selon la revendication 2, dans lequel le moyen de guidage d'élévation est formé par les surfaces internes de barres latérales de la structure de support, lesdites surfaces internes engageant par glissement les surfaces de guidage de l'écrou, et le moyen de limitation d'élévation comprend des faces de limitation à la base des barres latérales.

5. Mécanisme selon l'une quelconque des revendications 2, 3 ou 4, dans lequel des surfaces de came supérieure et inférieure sont formées sur la périphérie interne du manchon élévateur d'écrou, de sorte que l'élévation se fasse par engagement entre les coins de l'écrou et lesdites surfaces de came.

6. Mécanisme selon l'une quelconque des revendications 2 à 5, comportant une surface de came sur la partie inférieure de la périphérie interne à une extrémité du manchon élévateur d'écrou, de sorte qu'un coin inférieur de l'écrou engage la surface de came.

7. Mécanisme selon la revendication 6, comprenant en outre un ressort agissant sur une portion supérieure de l'écrou.

8. Mécanisme selon l'une quelconque des revendications 2 à 7, dans lequel le dispositif de libération de surcharge comprend un orifice à cliquet radial dans le manchon élévateur d'écrou, un cliquet disposé dans l'orifice à cliquet, le cliquet étant en engagement opérant avec une rainure de clavette axiale dans la tige de vis, et un ressort agissant sur ledit cliquet.

9. Mécanisme selon l'une quelconque des revendications 2 à 8, dans lequel le dispositif de libération de surcharge comprend un anneau de friction reçu dans le manchon élévateur d'écrou et relié à la tige de vis via une clavette de guidage, la tige de vis comportant une rainure de clavette axiale pour engagement avec la clavette de guidage.

10. Mécanisme selon l'une quelconque des revendications 2 à 8, dans lequel le dispositif de libération de surcharge comprend une frette à contraction, une tige de transmission de couple, et un anneau de limitation, dans lequel la frette comporte une fente ouverte, et dans l'état libre de la frette, le diamètre intérieur de la frette est inférieur au diamètre extérieur de la tige de vis, dans lequel la frette est montée sur la tige de vis entre la tige et le manchon élévateur d'écrou et est reliée avec le manchon via la tige de transmission de couple.

11. Mécanisme selon l'une quelconque des revendications 2 à 8, dans lequel le dispositif de libération de surcharge comprend un anneau de friction à expansion, une clavette de guidage et un anneau de limitation, l'anneau de friction comportant une fente ouverte et dans son état libre ayant un diamètre supérieur au diamètre intérieur de l'alésage du manchon élévateur d'écrou, l'anneau de friction étant disposé entre la tige de vis et le manchon élévateur d'écrou, et étant relié avec la tige de vis via une clavette de guidage engagée dans une rainure de clavette axiale dans la tige de vis.

12. Mécanisme selon l'une quelconque des revendications 2 à 8, dans lequel le dispositif de libération de surcharge comprend un manchon à glissement, une clavette de guidage et une rainure de clavette axiale ménagée dans la tige de vis, une projection étant formée dans une face d'extrémité du manchon élévateur d'écrou, et le manchon à glissement étant relié avec la tige de vis via la clavette de guidage.

13. Mécanisme selon l'une quelconque des revendications précédentes, comprenant en outre un dispositif de verrouillage pour commander l'élévation et l'abaissement de l'écrou.

14. Mécanisme selon la revendication 13, dans lequel le dispositif de verrouillage comprend une tige de réglage, un ressort de pression, une vis à pointe conique et une face de verrouillage sur le manchon élévateur d'écrou ou l'écrou, dans lequel la tige de réglage est reçue dans des orifices de guidage dans la structure de support.

15. Mécanisme selon l'une quelconque des revendications précédentes, dans lequel l'écrou forme un trou ovale, et comporte un filetage interne sur moins de la moitié du périmètre interne du trou ovale.
